# EUROPÄISCHE PATENTSCHRIFT

(11) **EP 3 591 258 B1**
(45) Veröffentlichungstag und Bekanntmachung des Hinweises auf die Patenterteilung: **11.10.2023**
(21) Anmeldenummer: 19182095.0
(22) Anmeldetag: 24.06.2019
(51) Int. Cl.: F16G 3/04, B65G 15/30, B64F 1/36, B65G 15/34, B65G 15/54

(54) **TRANSPORTBAND, VERWENDUNG EINES SOLCHEN, VERFAHREN ZU DESSEN HERSTELLUNG SOWIE FÖRDEREINRICHTUNG**
CONVEYOR BELT, USE OF SAME, METHOD FOR ITS PREPARATION AND CONVEYING DEVICE
BANDE DE TRANSPORT, UTILISATION D'UNE TELLE BANDE DE TRANSPORT, SON PROCÉDÉ DE FABRICATION AINSI QUE DISPOSITIF DE TRANSPORT

(30) Priorität: 02.07.2018 DE 202018103781 U
(43) Veröffentlichungstag der Anmeldung: 08.01.2020
(73) Patentinhaber: Heimbach GmbH, 52353 Düren (DE)
(72) Erfinder: PRASCHAK, Dirk, 41748 Viersen (DE); DEHEZ, Frederik, 4770 Montenau Amel (DE)
(74) Vertreter: Paul & Albrecht Patentanwälte PartG mbB

(56) Entgegenhaltungen:
- EP-A1- 0 396 035
- EP-A2- 0 098 502
- GB-A- 846 411

## Beschreibung

Die Erfindung betrifft ein Transportband zur Verwendung in einer Fördereinrichtung als Endlosband, umfassend eine flexible, bevorzugt undurchlässige Bandschicht, mit einer für die Auflage von Transportgut bestimmten Vorderseite und einer von der Vorderseite abgewandten Rückseite, und einen Träger, der mit der Bandschicht verbunden, insbesondere in die Bandschicht zumindest teilweise eingebettet ist, wobei die Bandschicht offenendig ausgebildet ist, mit zwei in Endloskonfiguration des Transportbandes aneinanderzulegenden bzw. aneinander liegenden Endbereichen, die in quer zur Laufrichtung des Bandes orientierten Kanten auslaufen. Darüber hinaus betrifft die Erfindung die Verwendung eines solchen Transportbandes, ein Verfahren zu dessen Herstellung sowie eine Fördereinrichtung, die ein solches Transportband umfasst.

Die EP 0 396 035 A1 und die EP 0 098 502 A2 offenbaren jeweils ein Band für Papiermaschinen mit einer flexiblen Bandschicht, in die ein Spiralgliederband als Träger teilweise eingebettet ist. Aus der GB 846,411 A geht ein endloses Förderband aus natürlichem oder synthetischen Gummi oder Plastikmaterial hervor, in das zur Verstärkung ein Drahtgeflecht vollständig eingelassen ist.

An Flughäfen beispielsweise kommen Fördereinrichtungen zum Einsatz, die dem Zweck dienen, Frachtgüter in Flugzeuge zu laden bzw. sie aus zu diesen zu entnehmen. Solche Fördereinrichtungen können Teil eines Flughafenbodenfahrzeuges sein, die hebe- und senkbare Ladeplattformen mit einer Rollenbahn umfassen. Die Ladeplattformen können dann in eine Höhe bei spielsweise mit dem Boden eines Laderaums eines Flugzeuges gebracht werden und über die Rollenbahn, welche eine Bewegung bzw. Förderung von Ladegut in einer Fördereinrichtung ermöglichen, kann Frachtgut vergleichsweise einfach be- oder entladen werden. Ein Flughafenbodenfahrzeug mit einer Fördereinrichtung mit einer Rollenbahn geht beispielsweise aus der EP 2 266 827 B1 hervor.

Aus der GB 846,411 ist weiterhin ein Endlos-Transportband bekannt, welches einen in Form eines Drahtgeflechtes gegebenen verstärkenden Träger umfasst, der in eine Bandschicht aus natürlichem oder synthetischem Gummi oder Plastik eingebettet ist. Der Träger ist dabei vollständig in die Bandschicht eingebettet, so dass die Vorderseite der Bandschicht die Vorderseite des Transportbandes und die Rückseite der Bandschicht dessen Rückseite bildet. Die Bandschicht ist offenendig ausgebildet, mit zwei in Endloskonfiguration des Transportbandes aneinander zu legenden bzw. aneinanderliegenden Endbereichen, die in quer zur Laufrichtung des Bandes orientierten Kanten auslaufen. Aus beiden Enden der Bandschicht steht jeweils eine Spirale des Drahtgeflechtes ein Stück heraus und eine Endloskonfiguration des Bandes kann erzielt werden, indem die Spiralen aneinander gelegt und mittels eines Steckdrahtes gesichert werden.

Die aus dem Stand der Technik vorbekannten Transportbänder haben sich prinzipiell bewährt. Es besteht jedoch weiterhin Bedarf an verbesserten Transportbändern, welche sich durch eine hohe Lebensdauer auszeichnen, vergleichsweise einfach fertigen lassen und gleichzeitig einen besonders zuverlässigen und reibungsfreien Transport von Ladegut ermöglichen.

Es ist daher Aufgabe der vorliegenden Erfindung, ein Transportband anzugeben, welches diese Eigenschaften vereint.

Diese Aufgabe wird bei einem Transportband der eingangs genannten Art dadurch gelöst, dass der eine Endbereich der Bandschicht eine Nahtklappe des Transportbandes bildet, die durch einen Abschnitt der Bandschicht gegeben ist, in dem der Träger nicht in die Bandschicht eingebettet ist.

Das erfindungsgemäße Transportband kann in einer offenendigen Konfiguration bereitgestellt werden und dann auf besonders komfortable Weise, insbesondere für die Installation in einer Fördereinrichtung, in eine Endloskonfiguration gebracht werden, wobei die erfindungsgemäß vorgesehene Nahtklappe es ermöglicht, dass in Endloskonfiguration ein Transportband mit einer durchgehenden, ebenen Oberfläche erhalten wird, welches einen besonders reibungsfreien und zuverlässigen Transport insbesondere von Fracht- und Ladegütern ermöglicht. Im Bereich der Nahtklappe ist die Bandschicht, wenn das Transportband sich noch in einem offenendigen, also nicht endlosen Zustand befindet, nicht mit dem sich ggf. darunter erstreckenden Trägerabschnitt verbunden sondern bildet eine Klappe, die, wenn der Träger durch Verbinden der beiden Enden in eine Endloskonfiguration gebracht wurde, die Verbindungsstelle übergreift, so dass eine geschlossene und ebene Oberseite des Transportbandes erhalten wird.

Im offenendigen Zustand kann das erfindungsgemäße Transportband selbst in demjenigen Fall, dass in einer Fördereinrichtung um eine Rollenbahn herum nur wenig Platz zur Verfügung steht, problemlos montiert und dann erst im montierten Zustand geschlossen werden.

Es hat sich gezeigt, dass unter Verwendung eines erfindungsgemäßen Tarnsportbandes, insbesondere zusammen mit einer Rollenbahn mit angetriebenen Rollen, welche das Transportband umgreift, ein besonders zuverlässiger, sicherer und schonender Frachttransport möglich wird. Selbst wenn anstelle von Euro-Paletten aus Holz weniger stabile Karton-Paletten mit darauf befindlichen Ladegütern über eine Rollenbahn zu fördern sind, was aus Gründen der Gewichtsreduzierung immer öfter der Fall ist, ergeben sich unter Verwendung des erfindungsgemäßen Transportbandes keinerlei Beschädigungen der Paletten, so dass eine Blockade der Rollenbahn, etwa durch herausgebrochene Kartonstücke, zuverlässig vermieden und ein reibungsfreier Frachttransport erzielt werden kann.

In besonders bevorzugter Ausgestaltung des erfindungsgemäßen Transportbandes bildet der andere, zweite Endbereich der Bandschicht keine Nahtklappe, sondern in diesem ist ein Abschnitt des Trägers in die Bandschicht eingebettet, bevorzugt bis zu der Kante, in welche der andere Endbereich ausläuft.

Das erfindungsgemäße Transportband hat insbesondere genau eine Nahtklappe, die in Endloskonfiguration einen Verbindungsbereich des Trägers, in dem eine Verbindung zum Erhalt der Endloskonfiguration hergestellt wird bzw. werden kann, zum Erhalt einer geschlossenen, ebenen Oberfläche übergreift.

Eine weitere bevorzugte Ausführungsform zeichnet sich dadurch aus, dass die Dicke der Bandschicht im Bereich der Nahtklappe die Dicke der Bandschicht in dem verbleibenden Bereich des Transportbandes unterschreitet. Insbesondere ist die Dicke der Bandschicht im Bereich der Nahtklappe derart, dass sie die Gesamtdicke des Transportbandes zumindest um die Dicke des Trägers unterschreitet. Erstreckt sich in einer Endloskonfiguration ein Abschnitt des Trägers unterhalb der Nahtklappe, dann wird in Summe die Dicke des Transportbandes erhalten, die auch im verbleibenden Bereich vorliegt, so dass das Transportband in einer Endloskonfiguration, insbesondere im in einer Fördereinrichtung installierten Zustand, insgesamt eine gleichbleibende Dicke aufweist.

In weiterer bevorzugter Ausgestaltung zeichnet sich die Nahtklappe durch eine zumindest im Wesentlichen gleichbleibende Dicke aus.

Darüber hinaus kann vorgesehen sein, dass sich die Nahtklappe über die gesamte Ausdehnung des Transportbandes in einer Richtung quer, insbesondere orthogonal zur Laufrichtung des Bandes erstreckt. Dies hat sich als besonderes geeignet erwiesen.

Was die Ausdehnung der Nahtklappe in Laufrichtung des Bandes angeht, liegt diese insbesondere im Bereich von 1 bis 5 cm, bevorzugt 2 bis 3 cm.

Weiterhin kann die Ausgestaltung derart sein, dass die beiden Endbereiche der Bandschicht mit ihren freien Kanten bzw. Stirnseiten formschlüssig aneinander anlegbar sind bzw. in einer Endloskonfiguration anliegen. So kann auf besonders zuverlässige Weise ein Transportband mit einer geschlossenen durchgehenden Vorderseite erhalten werden, was sich für den Lasttransport als besonders geeignet erwiesen hat.

Auch ist es möglich, dass die Ausgestaltung derart ist, dass die freien Kanten bzw. Stirnseiten die beiden Endbereiche der Bandschicht in einer Endloskonfiguration des Bandes unter Bildung eines Spaltes voneinander geringfügig beabstandet sind.

Die beiden Endbereiche der Bandschicht können ferner zur freien Kante hin in zu einander komplementären Schrägen auslaufen. Eine Druckbelastung in einer Richtung senkrecht zur Vorderseite resultiert dann in ein Aneinanderpressen der beiden Endbereiche der Bandschicht in dem angeschrägten Bereich, was einem ungewollten Auftrennen einer Verbindung der Nahtklappe mit einem darunterliegenden Trägerabschnitt und/oder dem anderen Endbereich entgegenwirken und für eine Dichtheit des Transportbandes sorgen kann.

Weiterhin bevorzugt ist die Ausgestaltung derart, dass in einer Endloskonfiguration des Transportbandes, wenn die beiden Endbereiche der Bandschicht, insbesondere deren Kanten, aneinander anliegen, die Vorderseite der Nahtklappe einen Abschnitt der Vorderseite des Transportbandes bildet bzw. bilden kann und die Rückseite der Nahtklappe einem Abschnitt des Trägers gegenüberliegt.

Die Ausgestaltung kann auch derart sein, dass in einer Endloskonfiguration, wenn die beiden Endbereiche der Bandschicht, insbesondere deren Kanten, aneinander anliegen, ein Transportband mit zumindest im Wesentlichen gleichbleibender Dicke erhalten wird.

Erfindungsgemäß ist vorgesehen, dass die Bandschicht Polyharnstoff oder Polyurethan umfasst oder daraus besteht. Diese Elastomere haben sich als besonders geeignet erwiesen, um ein Transportband zu erhalten, was sich durch eine hohe Flexibilität bei gleichzeitig hoher Schlagzähigkeit und Schnittfestigkeit auszeichnet.

Besonders bevorzugt umfasst die Bandschicht Polyharnstoff bzw. Polyurethan aus einem 2-Komponenten-System oder besteht aus einem solchen Elastomer. Polyharnstoff-Polymere werden in der Regel über ein 2-Komponenten-System erzeugt, wobei die eine Komponente, insbesondere ein Isocyanat, mit einem mehrfunktionellen Amin oder Amingemisch als weitere Komponente zu Polyharnstoff reagiert. Rein beispielhaft seien für entsprechende 2-Komponenten-Systeme für die Bandschicht genannt: Isocyanathaltiges Prä-Polymer, das mit Polyamin zu Polyharnstoff oder mit Polyalkohol (Polyol) zu Polyurethan reagiert.

Erfindungsgemäß ist die Bandschicht hergestellt worden, indem ein Beschichtungsmaterial bzw. Ausgangsstoffe, die miteinander zu einem Beschichtungsmaterial reagieren, in flüssigem Zustand auf wenigstens eine Seite des Trägers aufgesprüht wurde bzw. wurden. Aufbringen eines Beschichtungsmaterials in flüssigem Zustand stellt eine besonders geeignete Möglichkeit dar, einen mit der Bandschicht verbundenen Träger zu erhalten. Flüssig aufgebrachtes Material kann dann bevorzugt in den Träger eingedrungen sein, wodurch nach Aushärtung eine Konfiguration erhalten wird, in welcher der Träger zumindest teilweise in die Bandschicht eingebettet ist.

Der Träger kann - genau wie die Bandschicht - offenendig ausgebildet sein, mit zwei für eine Endloskonfiguration des Transportbandes miteinander zu verbindenden Endbereichen. Der Träger kann weiterhin ebenfalls in sich insbesondere quer, bevorzugt zumindest im Wesentlichen orthogonal zu der Laufrichtung des Bandes erstreckenden Kanten oder Stirnseiten auslaufen, wobei die Kanten bzw. Stirnseiten des Trägers und die Kanten bzw. Stirnseiten der Bandschicht nicht übereinander liegen müssen, sondern die Ausgestaltung derart sein kann, dass sie in Laufrichtung des Bandes versetzt zueinander sind.

Eine weitere Ausführungsform zeichnet sich dadurch aus, dass der Träger rückseitig der Bandschicht angeordnet ist, und insbesondere derart in die Bandschicht eingebettet ist, dass er sich nicht bis zu der Vorderseite der Bandschicht erstreckt, und bevorzugt die Vorderseite der Bandschicht die Vorderseite des Transportbandes bildet und/oder die Rückseite des Trägers die Rückseite des Transportbandes bildet. Der Träger ist insbesondere in die Rückseite der Bandschicht zumindest teilweise eingelassen.

Prinzipiell ist es auch möglich, dass der Träger vollständig in die Bandschicht eingebettet ist und die Vorderseite der Bandschicht die Vorderseite des Trägers und die Rückseite der Bandschicht die Rückseite des Trägers bildet.

Es sei angemerkt, dass das Transportband in bevorzugter Ausgestaltung zusätzlich zu dem Träger und der Bandschicht keine weiteren Schichten aufweist, dies aber auch nicht ausgeschlossen ist.

Der Träger ist in einer besonders bevorzugten Ausführungsform als Spiralgliederband ausgebildet, welches insbesondere eine Vielzahl von Wendeln umfasst, deren Windungen reißverschlussartig ineinandergreifen, und die mit Steckdrähten, die in Kanäle eingeschoben sind, die durch ineinandergreifende Windungen benachbarter Wendeln definiert werden, verbunden sind. Die Wendeln und Steckdrähte des Spiralgliederbandes erstrecken sich dann bevorzugt quer, besonders bevorzugt zumindest im Wesentlichen orthogonal zur Laufrichtung des Transportbandes, wodurch eine hohe Flexibilität in einer Richtung bei gleichzeitig hoher Festigkeit des Transportbandes erreicht wird. Insbesondere für den Fall, dass das erfindungsgemäße Transportband um eine Rollenbahn einer Fördereinrichtung gelegt wird, hat sich ein Spiralgliederband als Träger besonders geeignet erwiesen. Selbst für den Fall, dass die Montage an einer Rollenbahn mit stirnseitigen Umlenkrollen vergleichsweise geringen Durchmessers, von etwa nur wenigen Zentimetern zu erfolgen hat, bietet ein Spiralgliederband eine ausreichende Flexibilität bei gleichzeitig hoher Festigkeit.

Weitere erhebliche Vorteile eines Spiralgliederbandes als Träger bestehen darin, dass es sehr einfach von einer Endloskonfiguration in eine offene Konfiguration und umgekehrt gebracht werden kann, dies insbesondere allein durch Entfernen bzw. Setzen eines einzigen Steckdrahtes, und dass ein Spiralgliederband in Endloskonfiguration überall durch eine gleiche, hohe Festigkeit ausgezeichnet ist, insbesondere keine nachträglich herzustellenden, schwächeren Nahtstellen aufweist.

Das Spiralgliederband kann in Weiterbildung zusätzlich zu Steckdrähten Fülldrähte aufweisen. Die Fülldrähte erstrecken sich zweckmäßiger Weise zumindest im Wesentlichen parallel zu den Steckdrähten, also ebenfalls quer bzw. orthogonal zur Laufrichtung des Bandes und/oder sind als Flachdrähte ausgestaltet. Das Vorsehen von Fülldrähten in einem Spiralgliederband ist besonders vorteilig, wenn zum Erhalt der Bandschicht ein flüssiges Beschichtungsmaterial auf das Spiralgliederband aufgesprüht wird. Dann können Fülldrähte ein vollständiges Durchdringen des Trägers mit Beschichtungsmaterial oder ein Herauslaufen von Beschichtungsmaterial auf der gegenüberliegenden Seite verhindern.

Die Wendeln und/oder die Steckdrähte und/oder die Fülldrähte des Spiralgliederbandes können weiterhin bevorzugt Polymer-Monofilamente umfassen oder aus Polymer-Monofilamenten bestehen.

Alternativ bzw. zusätzlich können die Wendeln und/oder die Steckdrähte und/oder die Fülldrähte Polyester umfassen oder aus Polyester bestehen.

Es ist auch möglich, dass alternativ zu einem Spiralgliederband ein Gewebe mit Kett- und Schussfäden oder eine Maschenware, insbesondere ein Kettengewirk, als Träger vorgesehen ist.

Was die Dimensionen des erfindungsgemäßen Transportbandes angeht, kann vorgesehen sein, dass dessen Breite im Bereich von 1,5 bis 3,0 m, insbesondere 2,2 bis 2,4 m liegt. Alternativ oder zusätzlich kann die Länge des Transportbandes im Bereich von 8,0 bis 20,0 m, insbesondere im Bereich von 12 bis 16 m liegen. Unter der Länge ist dabei die Ausdehnungsrichtung in Lauf- bzw. Transportrichtung des erfindungsgemäßen Transportbandes und unter der Breite die Ausdehnung orthogonal dazu zu verstehen.

Ein weiterer Gegenstand der Erfindung ist die Verwendung eines erfindungsgemäßen Transportbandes in einer Fördereinrichtung, insbesondere einer der Frachtübergabe an einem Flughafen dienenden Fördereinrichtung, besonders bevorzugt einer Fördereinrichtung eines Flughafenbodenfahrzeugs.

Das erfindungsgemäße Transportband hat sich als besonders geeignet für den Frachttransport an Flughäfen erwiesen.

Besonders bevorzugt wird das erfindungsgemäße Transportband in einer Fördereinrichtung mit einer Rollenbahn verwendet, bevorzugt derart, dass es die Rollenbahn in einer Endloskonfiguration umgreift. Die Verwendung ist weiterhin bevorzugt derart, dass die Vorderseite der Bandschicht nach außen weist. Dann ist zu transportierendes Frachtgut auf die Vorderseite der Bandschicht aufzulegen.

Schließlich ist ein Gegenstand der Erfindung eine Fördereinrichtung, insbesondere eine der Frachtübergabe an einem Flughafen dienende Fördereinrichtung, besonders bevorzugt eine Fördereinrichtung eines Flughafenbodenfahrzeugs, umfassend ein erfindungsgemäßes Transportband.

Bevorzugt weist die erfindungsgemäße Fördereinrichtung eine Rollenbahn auf und das Transportband umgreift die Rollenbahn in Endloskonfiguration. Weiterhin bevorzugt weist die Vorderseite der Bandschicht nach außen, so dass sie der Auflage von zu transportierendem Frachtgut dient.

Eine weitere bevorzugte Ausführungsform einer erfindungsgemäßen Fördereinrichtung mit einem erfindungsgemäßen Transportband zeichnet sich dadurch aus, dass die Nahtklappe des Transportbandes mittels eines Klebstoffes, insbesondere eines 2-Komponenten-Klebstoffes mit einem unter der Nahtklappe liegenden Abschnitt des Trägers und/oder dem anderen Endbereich der Bandschicht verbunden ist.

Das erfindungsgemäße Transportband kann insbesondere hergestellt werden, indem
- ein Träger, bei dem es sich insbesondere um ein Spiralgliederband handelt, in einer Endloskonfiguration bereitgestellt wird,
- ein Abschnitt des Trägers, oberhalb dem sich später die Nahtklappe erstrecken soll, mittels einer Maskierung versehen wird,
- auf der mit der Maskierung versehenen Seite des Trägers die Polyharnstoff oder Polyurethan umfassende oder daraus bestehende Bandschicht hergestellt wird, indem Beschichtungsmaterial bzw. Ausgangsstoffe, aus denen das Beschichtungsmaterial entstehen soll, in flüssigem Zustand auf die maskierte Seite des Trägers aufgesprüht wird bzw. werden,
- nach dem Aushärten des Beschichtungsmaterials ein sich quer, insbesondere zumindest im Wesentlichen orthogonal zu der Laufrichtung des Bandes erstreckender Schnitt durch die Bandschicht hergestellt wird, um die Nahtklappe zu erhalten, wobei bevorzugt zumindest im Wesentlichen, insbesondere exakt entlang einer Kante der Maskierung geschnitten wird, und
- anschließend die Maskierung entfernt wird.

Dieses Verfahren ist ebenfalls Gegenstand der vorliegenden Erfindung.

Da von der Dimensionierung der Maskierung die Dimensionierung der resultierenden Nahtklappe abhängt, wird die Dimensionierung der Maskierung bevorzugt im Bereich der für die Nahtklappe vorgenannten Breiten- sowie Längenbereichen gewählt. Die Maskierung erstreckt sich bevorzugt über die gesamte Breite des Trägers, und/oder weist eine rechteckige Form auf. Es derseite des Trägers vorübergehend aufgeklebt und nach Herstellung der Bandschicht und des Schnittes in dieser wieder von dem Träger entfernt wird. Die sich nach der Herstellung des Schnittes ergebende Nahtklappe kann angehoben werden, um die darunterliegende Maskierung für deren Entfernung zugänglich zu machen.

In der Zeichnung ist die Erfindung anhand eines Ausführungsbeispiels näher veranschaulicht. Es zeigen:
Figur 1 einen Abschnitt eines Ausführungsbeispiels eines erfindungsgemäßen Transportbandes in rein schematischer Schnittdarstellung mit Maskierung und darüber hergestellter Bandschicht,
Figur 2 das Transportband aus Figur 1 nach der Herstellung eines Schnittes in der Bandschicht und Entfernung der Maskierung,
Figur 3 das Transportband aus Figur 2 nach Entfernung eines Steckdrahtes unterhalb der Nahtklappe,
Figur 4 das Transportband aus Figur 3 im um die Rollenbahn einer Fördereinrichtung gelegten Zustand mit wieder eingefügtem Steckdraht,
Figur 5 das Transportband aus Figur 4 im fertig montierten Zustand mit verklebter Nahtklappe.

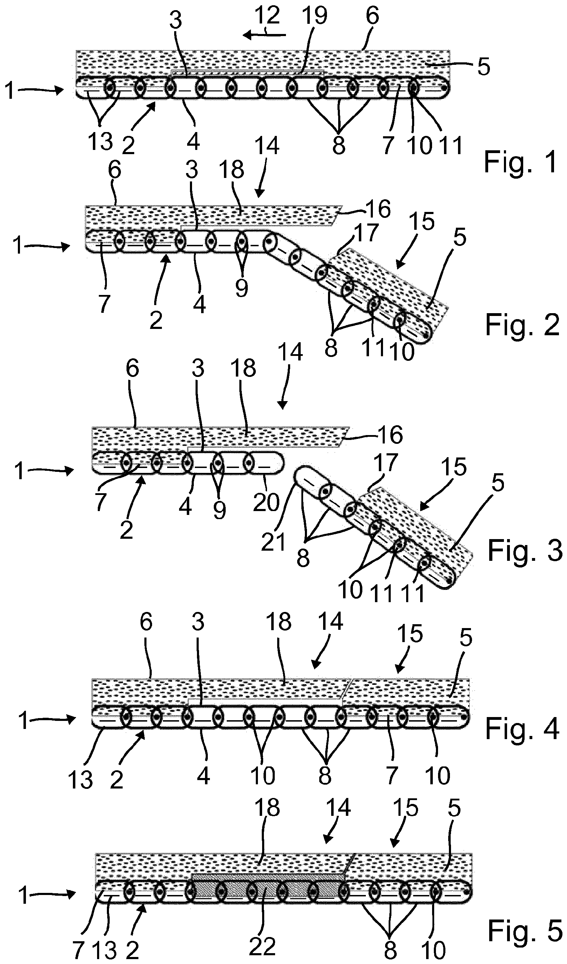

Die Figuren 1 bis 5 zeigen abschnittsweise und rein schematisch ein Ausführungsbeispiel eines erfindungsgemäßen Transportbandes 1 in verschiedenen Zuständen während seiner Herstellung (Figuren 1 bis 3) und der anschließenden Montage in einer in den Figuren nicht weiter dargestellten Fördereinrichtung eines Flughafenbodenfahrzeugs (Figuren 4 und 5).

Das Transportband 1 ist etwa 2,3 m breit und etwa 14 m lang und umfasst einen in Form eines Spiralgliederbandes 2 gegebenen Träger mit einer Vorderseite 3 und einer Rückseite 4 sowie eine vorderseitig des Spiralgliederbandes 2 angeordnete Bandschicht 5. Das Spiralgliederband 2 ist, wie in den Figuren erkennbar, teilweise in die Rückseite 7 der Bandschicht 5 eingebettet. Die Bandschicht 5 hat ebenfalls eine Vorderseite 6 und eine Rückseite 7, wobei die Vorderseite 6 der Bandschicht 5 die für die Auflage von Transportgut bestimmte Vorderseite des Bandes 1 und die Rückseite 4 des Spiralgliederbandes 2 die Rückseite es Bandes 1 bildet, die im montierten Zustand einer in den Figuren nicht dargestellten Rollenbahn einer Fördereinrichtung zugewandt ist.

Das als Träger dienende Spiralgliederband 2 umfasst in an sich bekannter Weise eine Vielzahl von Wendeln 8, deren Windungen 9 reißverschlussartig ineinandergreifen, und die mit Steckdrähten 10, die in Kanäle 11 eingeschoben sind, die durch ineinandergreifende Windungen 9 benachbarter Wendeln 8 definiert werden, verbunden sind. Die Steckdrähte 10 erstrecken sich quer, vorliegend zumindest im Wesentlichen orthogonal zur Laufrichtung 12 des Transportbandes 1, die in den Figuren durch einen Pfeil angedeutet ist.

Das Spiralgliederband 2 weist zusätzlich zu den Steckdrähten 10 als Flachdrähte ausgebildete Fülldrähte 13 auf, die sich zumindest im Wesentlichen parallel zu den Steckdrähten 10 erstrecken, also zumindest im Wesentlichen orthogonal zur Laufrichtung 12 des Bandes 1.

Die Wendeln 8, Steckdrähte 10 und Fülldrähte 13 des Spiralgliederbandes 2 bestehen vorliegend aus Polymer-Monofilamenten.

Die Bandschicht 5 besteht aus Polyharnstoff aus einem 2-Komponenten-System, konkret isocyanathaltigem Prä-Polymer und Polyamin.

Die Bandschicht 5 ist offenendig ausgebildet, welche mit zwei in Endloskonfiguration des Transportbandes 1 aneinanderzulegenden bzw. aneinanderliegenden Endbereichen 14, 15, die in quer, vorliegend orthogonal zur Laufrichtung 12 des Bandes 1 orientierten Schrägen 16, 17 auslaufen.

Der eine, in den Figuren linke Endbereich 14 der Bandschicht 5 bildet erfindungsgemäß eine Nahtklappe 18 des Transportbandes 1, die durch einen Abschnitt der Bandschicht 5 gegeben ist, in dem das Spiralgliederband 2 nicht in die Rückseite 7 der Bandschicht 5 eingebettet ist. Die Nahtklappe 18 hat eine in der Aufsicht auf das Band 1 rechteckige Form, wobei die Breite der Nahtklappe 18 der Breite das Bandes 1 entspricht, also bei etwa 2,3 m liegt, und deren Ausdehnung in Laufrichtung etwa 2,5 cm beträgt.

Es sei angemerkt, dass die Nahtklappe 18 alternativ zu dem dargestellten Ausführungsbeispiel, bei dem sie sich orthogonal zur Laufrichtung 12 des Transportbandes 1 erstreckt, auch schräg orientiert sein kann. In einem solchen Falle würde die Breite der Nahtklappe 18 oberhalb von 2,3 m liegen.

Der andere, in den Figuren rechte Endbereich 15 der Bandschicht 5 hingegen bildet keine Nahtklappe, sondern in diesem ist ein Abschnitt des Spiralgliederbandes 2 in die Rückseite 7 der Bandschicht 5 eingebettet, und zwar bis zu der Kante bzw. vorliegend Schräge17, in welche dieser Endbereich 15 ausläuft.

Die Dicke der Bandschicht 5 im Bereich der Nahtklappe 18 unterschreitet erkennbar die Dicke der Bandschicht 5 in dem verbleibenden Bereich des Transportbandes 1. Konkret ist die Bandschicht 5 im Bereich der Nahtklappe 18 nur etwa halb so dick wie im verbleibenden Bereich. Weiterhin gilt, dass die Dicke der Bandschicht 5 im Bereich der Nahtklappe 18 plus die Dicke des Spiralgliederbandes 2 die Dicke des Bandes 1 knapp unterschreitet.

Alternativ zu dem dargestellten Ausführungsbeispiel ist es auch möglich, dass die Bandschicht 5 im Bereich der Nahtklappe 18 ähnlich oder genauso dick ist wie im verbleibenden Bereich des Transportbandes 1.

Das Transportband 1 wurde unter Durchführung folgender Schritte erhalten.

Zunächst wurde das Spiralgliederband 2 bereitgestellt und zwar als Endlosband, das heißt in einem Zustand, in dem sämtliche benachbarten Wendeln 8 jeweils durch einen Steckdraht 10 miteinander verbunden sind. Auf die Vorderseite 3 des Spiralgliederbandes 2 wurde in einem nächsten Schritt eine Maskierung in Form eines Klebebandes 19 aufgebracht. Das Klebeband 19, das nur in Figur 1 dargestellt ist, zeichnet sich durch eine rechteckige Form mit Kantenlängen von 2,3 m und 2,5 cm aus. Das Klebeband 19 wurde derart auf das Spiralgliederband aufgeklebt, dass seine längeren Seiten zumindest im Wesentlichen parallel zu den Wendeln 8 und Steck- 10 sowie Fülldrähten 13 des Spiralgliederbandes 2 orientiert sind und es sich über die gesamte Breite des Spiralgliederbandes 2 erstreckt.

In einem nächsten Schritt wurde vorderseitig auf dem teilweise durch das als Maskierung dienende Klebeband 19 abgedeckten Spiralgliederband 2 die Bandschicht 5 hergestellt, indem Ausgangsstoffe für einen Polyharnstoff oder ein Polyurethan auf die Vorderseite 3 des Spiralgliederbandes 2 mit darauf angeordnetem Klebeband 19 in flüssigem Zustand aufgesprüht wurde. Zur Herstellung des verwendeten Polyharnstoffes kam bei dem dargestellten Ausführungsbeispiel ein 2-Komponenten-System zur Herstellung einer Elastomer-Beschichtung zum Einsatz. Konkret wurde isocyanathaltiges Prä-Polymer mit Polyamin gemischt, um zu Polyharnstoff zu reagieren. Die Mischung erfolgte unmittelbar vor dem Aufsprühen auf das Spiralgliederband 2, damit das Beschichtungsmaterial noch innerhalb der Topfzeit, und vor Abschluss der Reaktion und somit Aushärtung, auf das Spiralgliederband 2 aufgebracht werden konnte. Die Topfzeit ist dabei die Zeit, in der das Gemisch der Ausgangsstoffe noch fließfähig ist. Bei dem dargestellten Ausführungsbeispiel wurde das Beschichtungsmaterial mittels in den Figuren nicht gezeigter Düsen aufgesprüht und die Mischung der beiden Komponenten erfolgt unmittelbar in den Düsen.

Die Figur 1 zeigt das Spiralgliederband 2, das auf dessen Vorderseite 3 aufgeklebte Klebeband 19 und die darüber hergestellte Bandschicht 5.

In einem nächsten Schritt wurde die Bandschicht 5 in dem sich oberhalb des Klebebandes 19, also der Maskierung, erstreckenden Bereich aufgeschnitten und zwar möglichst exakt oberhalb einer der längeren Seiten des Klebebandes 19, also orthogonal zur Laufrichtung 12 des Bandes 1. Durch die Herstellung des Schnittes wurde die Nahtklappe 18 erhalten.

Die Nahtklappe 18 wurde anschließend angehoben, um den Zugriff auf das darunterliegende Klebeband 19 zu ermöglichen, und das Klebeband 19 wurde von dem Spiralgliederband 2 entfernt, indem es von diesem abgezogen wurde. Der resultierende Zustand ist in der Figur 2 gezeigt.

Aus dem sich unterhalb der Nahtklappe 18 erstreckenden Bereich des Spiralgliederbandes 2 wurde anschließend genau ein Steckdraht 10 entfernt, um das Spiralgliederband unterhalb der Nahtklappe 18 zu öffnen, also die Endloskonfiguration aufzuheben. So wurde der in Figur 3 gezeigte Zustand erhalten, welcher dem fertig hergestellten, für die Montage in einer Fördereinrichtung besonders geeigneten Zustand des erfindungsgemäßen Transportbandes 1 entspricht.

Sowohl die Bandschicht 5 als auch das Spiralgliederband 2 sind dann in einem offenendigen Zustand, so dass das erfindungsgemäße Transportband 1 besonders komfortabel montiert, insbesondere um die Rollenbahn einer Fördereinrichtung gelegt und dort in die benötigte Endloskonfiguration gebracht werden kann.

Hierfür wird das Band 1 derart um eine Rollenbahn gelegt, dass die Bandschicht 5 nach außen weist und die beiden Enden 20, 21 des offenen Spiralgliederbandes 2 (vgl. Figur 3) werden aneinandergelegt und mittels eines Steckdrahtes 10 gesichert. Der resultierende Zustand ist in der Figur 4 gezeigt. Dabei ermöglicht die Nahtklappe 18, die für den Verbindungsvorgang angehoben werden kann, einen problemlosen Zugang zu dem Verbindungsbereich.

Anschließend wird die Nahtklappe 18 fixiert, was mittels eines 2-Komponenten-Klebers 22, der nur in Figur 5 dargestellt ist, erfolgt. Dieser wird auf das Spiralgliederband 2 in dem sich unterhalb der Nahtklappe 18 erstreckenden Bereich und/oder auf die Unterseite der Nahtklappe 18 und/oder die Schräge 16 und/oder 17 aufgebracht und die Nahtklappe 18 wird anschließend auf das Spiralgliederband 2 aufgedrückt. Nach dem Aushärten ist die Nahtklappe 18 fest mit dem darunterliegenden Spiralgliederband 2 sowie der direkt angrenzende Bandschicht 5 des anderen Endbereiches 15 verbunden und es steht ein Transportband 1 mit geschlossener, ebener Oberseite und insgesamt zumindest im Wesentlichen gleichbleibender Dicke zur Verfügung, welches einen reibungsfreien, sicheren und schonenden Frachttransport ermöglicht. Der fertig montierte Zustand mit verklebter Nahtklappe 18 ist in der Figur 5 gezeigt. Es sei angemerkt, dass alternativ zu dem dargestellten Ausführungsbeispiel die Nahtklappe 18 auch nicht verklebt werden kann.

Im montierten Zustand, wenn das erfindungsgemäße Transportband 1 sich in Endloskonfiguration um eine Rollenbahn erstreckt, stellt es insbesondere einen Bestandteil einer in den Figuren nicht gezeigten erfindungsgemäßen Fördereinrichtung, die insbesondere durch eine der Frachtübergabe an einem Flughafen dienenden Fördereinrichtung, besonders bevorzugt eine Fördereinrichtung eines Flughafenbodenfahrzeugs gegeben ist, dar.

Das Transportband 1 ist dabei derart in der Fördereinrichtung montiert, dass die Vorderseite 6 der Bandschicht 5 nach außen weist und auf diese zu transportierendes Frachtgut gelegt wird, während die Rückseite 4 des Spiralgliederbandes 2 mit der Rollenbahn Kontakt steht, also die Maschinenseite bildet.

## Patentansprüche

1. Transportband (1) zur Verwendung in einer Fördereinrichtung als Endlosband, umfassend eine flexible, bevorzugt undurchlässige Bandschicht (5), mit einer für die Auflage von Transportgut bestimmten Vorderseite (6) und einer von der Vorderseite (6) abgewandten Rückseite (7), und einen Träger (2), der mit der Bandschicht (5) verbunden, insbesondere in die Bandschicht (5) zumindest teilweise eingebettet ist, wobei die Bandschicht (5) offenendig ausgebildet ist, mit zwei in Endloskonfiguration des Transportbandes (1) aneinanderzulegenden bzw. aneinanderliegenden Endbereichen (14, 15), die in quer zur Laufrichtung (12) des Bandes (1) orientierten Kanten (16, 17) auslaufen, wobei der eine Endbereich (14) der Bandschicht (5) eine Nahtklappe (18) des Transportbandes (1) bildet, die durch einen Abschnitt der Bandschicht (5) gegeben ist, in dem der Träger (2) nicht in die Bandschicht (5) eingebettet ist, **dadurch gekennzeichnet, dass** die Bandschicht (5) Polyharnstoff oder Polyurethan umfasst oder daraus besteht, und dass die Bandschicht (5) hergestellt wurde, indem ein Beschichtungsmaterial bzw. miteinander zu einem Beschichtungsmaterial reagierende Ausgangsstoffe in flüssigem Zustand auf wenigstens eine Seite (3) des Trägers (2) aufgesprüht wurde bzw. wurden.

2. Transportband (1) nach Anspruch 1, **dadurch gekennzeichnet, dass** der andere Endbereich (15) der Bandschicht (5) keine Nahtklappe (18) bildet sondern in diesem ein Abschnitt des Trägers (2) in die Bandschicht (5) eingebettet ist, bevorzugt bis zu der Kante (17), in welche der andere Endbereich (15) ausläuft.

3. Transportband (1) nach Anspruch 1 oder 2, **dadurch gekennzeichnet, dass** die Dicke der Bandschicht (5) im Bereich der Nahtklappe (18) die Dicke der Bandschicht (5) in dem verbleibenden Bereich des Transportbandes (1) unterschreitet, und/oder sich die Nahtklappe (18) durch eine zumindest im Wesentlichen gleichbleibende Dicke auszeichnet, und/oder dass sich die Nahtklappe (18) über die gesamte Ausdehnung des Transportbandes (1) in einer Richtung quer zur Laufrichtung (12) des Bandes (1) erstreckt, und/oder sich die Nahtklappe (18) durch eine Ausdehnung in Laufrichtung (12) des Bandes (1) im Bereich von 1 bis 5 cm, insbesondere 2 bis 3 cm auszeichnet.

4. Transportband (1) nach einem der vorhergehenden Ansprüche, **dadurch gekennzeichnet, dass** die Ausgestaltung derart ist, dass in einer Endloskonfiguration des Transportbandes (1), wenn die beiden Endbereiche (14, 15), insbesondere deren Kanten (16, 17), aneinander anliegen, die Vorderseite der Nahtklappe (18) einen Abschnitt der Vorderseite des Transportbandes (1) bildet bzw. bilden kann und die Rückseite der Nahtklappe (18) einem Abschnitt des Trägers (2) gegenüberliegt, und/oder dass die Ausgestaltung derart ist, dass die beiden Endbereiche (14, 15) der Bandschicht (5) mit ihren freien Kanten (16, 17) formschlüssig aneinander anlegbar sind bzw. in einer Endloskonfiguration anliegen, und/oder dass die beiden Endbereiche (14, 15) der Bandschicht (5) zur freien Kante hin in zu einander komplementären Schrägen (16, 17) auslaufen, und/oder dass die Ausgestaltung derart ist, dass in einer Endloskonfiguration, wenn die beiden Endbereiche (14, 15) der Bandschicht (5) aneinander anliegen, ein Transportband (1) mit zumindest im Wesentlichen gleichbleibender Dicke und/oder mit einer ebenen für die Auflage von Transportgut bestimmten Vorderseite erhalten wird.

5. Transportband (1) nach einem der vorhergehenden Ansprüche, **dadurch gekennzeichnet, dass** die Bandschicht (5) Polyharnstoff bzw. Polyurethan aus einem 2-Komponenten-System umfasst oder daraus besteht.

6. Transportband (1) nach einem der vorhergehenden Ansprüche, **dadurch gekennzeichnet, dass** der Träger (2) rückseitig der Bandschicht (5) angeordnet ist, und insbesondere derart in die Bandschicht (5) eingebettet ist, dass er sich nicht bis zu der Vorderseite (6) der Bandschicht (5) erstreckt, und bevorzugt die Vorderseite (6) der Bandschicht (5) die Vorderseite des Transportbandes (1) bildet und/oder die Rückseite (4) des Trägers (2) die Rückseite des Transportbandes (1) bildet.

7. Transportband (1) nach einem der vorhergehenden Ansprüche, **dadurch gekennzeichnet, dass** der Träger (2) vollständig in die Bandschicht (5) eingebettet ist.

8. Transportband (1) nach einem der vorhergehenden Ansprüche, **dadurch gekennzeichnet, dass** der Träger als Spiralgliederband (2) ausgebildet ist, welches insbesondere eine Vielzahl von Wendeln (8) umfasst, deren Windungen (9) reißverschlussartig ineinandergreifen, und die mit Steckdrähten (10), die in Kanäle (11) eingeschoben sind, die durch ineinandergreifende Windungen (9) benachbarter Wendeln (8) definiert werden, verbunden sind, wobei sich die Steckdrähte (10) quer, bevorzugt zumindest im Wesentlichen orthogonal zur Laufrichtung (12) des Transportbandes (1) erstrecken.

9. Transportband (1) nach Anspruch 8, **dadurch gekennzeichnet, dass** das Spiralgliederband (2) zusätzlich zu den Steckdrähten (10) Fülldrähte (13) aufweist.

10. Transportband (1) nach Anspruch 8 oder 9, **dadurch gekennzeichnet, dass** die Wendeln (8) und/oder die Steckdrähte (10) und/oder die Fülldrähte (13) des Spiralgliederbandes (2) Polymer-Monofilamente umfassen oder aus Polymer-Monofilamenten bestehen.

11. Transportband (1) nach einem der Ansprüche 8 bis 10, **dadurch gekennzeichnet, dass** die Wendeln (8) und/oder die Steckdrähte (10) und/oder die Fülldrähte (13) des Spiralgliederbandes (2) Polyester umfassen oder aus Polyester bestehen.

12. Transportband (1) nach einem der vorhergehenden Ansprüche, **dadurch gekennzeichnet, dass** die Breite des Transportbandes (1) im Bereich von 1,5 bis 3,0 m, insbesondere 2,2 bis 2,4 m, und/oder die Länge des Transportbandes (1) im Bereich von 8,0 bis 20,0 m, insbesondere im Bereich von 12 bis 16 m liegt.

13. Verfahren zur Herstellung eines Transportbandes (1) nach einem der vorhergehenden Ansprüche, bei dem
- ein Träger (2), bei dem es sich insbesondere um ein Spiralgliederband handelt, in einer Endloskonfiguration bereitgestellt wird,
- ein Abschnitt des Trägers (2) , oberhalb dem sich später die Nahtklappe (18) erstrecken soll, mittels einer Maskierung (19) versehen wird,
- auf der mit der Maskierung (19) versehenen Seite des Trägers (2) die Polyharnstoff oder Polyurethan umfassende oder daraus bestehende Bandschicht (5) hergestellt wird, indem Beschichtungsmaterial bzw. Ausgangsstoffe, aus denen das Beschichtungsmaterial entstehen soll, in flüssigem Zustand auf die maskierte Seite des Trägers (2) aufgesprüht wird bzw. werden,
- nach dem Aushärten des Beschichtungsmaterials ein sich quer, insbesondere zumindest im Wesentlichen orthogonal zu der Laufrichtung des Bandes erstreckender Schnitt durch die Bandschicht (5) hergestellt wird, um die Nahtklappe (18) zu erhalten, wobei bevorzugt zumindest im Wesentlichen, insbesondere exakt entlang einer Kante der Maskierung (19) geschnitten wird, und
- anschließend die Maskierung (19) entfernt wird.

14. Verwendung eines Transportbandes (1) nach einem der Ansprüche 1 bis 12 in einer Fördereinrichtung, insbesondere einer der Frachtübergabe an einem Flughafen dienenden Fördereinrichtung, besonders bevorzugt einer Fördereinrichtung eines Flughafenbodenfahrzeugs.

15. Verwendung nach Anspruch 14, **dadurch gekennzeichnet, dass** das Transportband (1) in einer Fördereinrichtung mit einer Rollenbahn verwendet wird, bevorzugt derart, dass es die Rollenbahn in Endloskonfiguration umgreift.

16. Fördereinrichtung, insbesondere der Frachtübergabe an einem Flughafen dienende Fördereinrichtung, besonders bevorzugt eines Flughafenbodenfahrzeugs, umfassend ein Transportband (1) nach einem der Ansprüche 1 bis 12.

17. Fördereinrichtung nach Anspruch 16, **dadurch gekennzeichnet, dass** die Fördereinrichtung eine Rollenbahn aufweist und das Transportband (1) die Rollenbahn in Endloskonfiguration umgreift, und/oder dass die Nahtklappe (18) des Transportbandes (1) mittels eines Klebstoffes, insbesondere eines 2-Komponenten-Klebstoffes mit einem unter der Nahtklappe (18) liegenden Abschnitt des Trägers (2) und/oder dem anderen Endbereich (15) der Bandschicht (5) verbunden ist.

## Claims

1. Conveyor belt (1) for use in a conveyor device as an endless belt, comprising a flexible, preferably impermeable belt layer (5), having a front side (6) intended for supporting material to be conveyed and a rear side (7) facing away from the front side (6), and a carrier (2) which is connected to the belt layer (5), in particular is at least partially embedded in the belt layer (5), the belt layer (5) being open-ended with two end regions (14, 15) which are to be placed against one another or abut each other in endless configuration of the conveyor belt (1), the end regions (14, 15) ending in edges (16, 17) which are oriented transversely with respect to the running direction (12) of the belt (1), wherein the one end region (14) of the belt layer (5) forms a seam flap (18) of the conveyor belt (1) which is given by a section of the belt layer (5), in which the carrier (2) is not embedded in the belt layer (5), **characterized in that** the belt layer (5) comprises or consists of polyurea or polyurethane, and **in that** the belt layer (5) has been produced by spraying a coating material or starting materials reacting with one another to form a coating material in the liquid state onto at least one side (3) of the carrier (2).

2. Conveyor belt (1) according to claim 1, **characterized in that** the other end region (15) of the belt layer (5) does not form a seam flap (18) but in the other end region (15) a section of the carrier (2) is embedded in the belt layer (5), preferably up to the edge (17) into which the other end region (15) ends.

3. Conveyor belt (1) according to claim 1 or 2, **characterized in that** the thickness of the belt layer (5) in the region of the seam flap (18) is less than the thickness of the belt layer (5) in the remaining region of the conveyor belt (1), and/or the seam flap (18) is **characterized by** an at least substantially constant thickness, and/or **in that** the seam flap (18) extends over the entire expansion of the conveyor belt (1) in a direction transverse to the running direction (12) of the belt (1), and/or the seam flap (18) is **characterized by** an expansion in the running direction (12) of the belt (1) in the range from 1 to 5 cm, in particular 2 to 3 cm.

4. Conveyor belt (1) according to one of the preceding claims, **characterized in that** the configuration is such that in an endless configuration of the conveyor belt (1), when the two end regions (14, 15), in particular their edges (16, 17), abut each other, the front side of the seam flap (18) forms or can form a section of the front side of the conveyor belt (1) and the rear side of the seam flap (18) lies opposite a section of the carrier (2), and/or **in that** the configuration is such that the two end regions (14, 15) of the belt layer (5) can be or in endless configuration are placed with their free edges (16, 17) against one another in a form-fitting manner and/or **in that** the two end regions (14, 15) of the belt layer (5) end towards the free edge in slopings (16, 17) which are complementary to one another, and/or **in that** the configuration is such that, in an endless configuration, when the two end regions (14, 15) of the belt layer (5) abut each other, a conveyor belt (1) is obtained with an at least essentially constant thickness and/or with a flat front side intended for the support of transport material.

5. Conveyor belt (1) according to one of the preceding claims, **characterized in that** the belt layer (5) comprises or consists of polyurea or polyurethane from a 2-component system.

6. Conveyor belt (1) according to one of the preceding claims, **characterized in that** the carrier (2) is disposed on the back of the belt layer (5), and in particular is embedded in the belt layer (5) in such a way that the carrier (2) does not extend up to the front side (6) of the belt layer (5), and preferably the front side (6) of the belt layer (5) forms the front side of the conveyor belt (1) and/or the back side (4) of the carrier (2) forms the back side of the conveyor belt (1).

7. Conveyor belt (1) according to one of the preceding claims, **characterized in that** the carrier (2) is completely embedded in the belt layer (5).

8. Conveyor belt (1) according to one of the preceding claims, **characterized in that** the carrier is embodied as a spiral link belt (2) which comprises, in particular, a multiplicity of spirals (8), the turns (9) of which engage in one another in the manner of a zipper, and which are connected by plug-in wires (10), which are inserted into channels (11) defined by intermeshing turns (9) of adjacent spirals (8), the plug-in wires (10) extending transversely, preferably at least substantially orthogonally, to the running direction (12) of the conveyor belt (1).

9. Conveyor belt (1) according to claim 8, **characterized in that** the spiral link belt (2) in addition to the plug-in wires (10) has filler wires (13).

10. Conveyor belt (1) according to claim 8 or 9, **characterized in that** the spirals (8) and/or the plug-in wires (10) and/or the filler wires (13) of the spiral link belt (2) comprise polymer monofilaments or consist of polymer monofilaments.

11. Conveyor belt (1) according to one of claims 8 to 10, **characterized in that** the spirals (8) and/or the plug-in wires (10) and/or the filler wires (13) of the spiral link belt (2) comprise polyester or consist of polyester.

12. Conveyor belt (1) according to one of the preceding claims, **characterized in that** the width of the conveyor belt (1) is in the range of from 1,5 to 3,0 m, in particular 2,2 to 2,4 m, and/or the length of the conveyor belt (1) is in the range of from 8,0 to 20,0 m, in particular in the range from 12 to 16 m.

13. Method of manufacturing a conveyor belt (1) according to one of the preceding claims, wherein
- a carrier (2), which in particular is embodied as a spiral link belt, is provided in an endless configuration,
- a portion of the carrier (2) above which the seam flap (18) shall later extend is provided by means of a masking (19),
- the belt layer (5) comprising or consisting of polyurea or polyurethane is produced on that side of the carrier (2) provided with the masking (19) by spraying coating material or starting materials, from which the coating material is to be formed, in the liquid state onto the masked side of the carrier (2),
- after curing of the coating material, in order to obtain the seam flap (18), a cut is made through the belt layer (5), the cut extending transversely, in particular at least substantially orthogonally to the running direction of the belt, preferably cutting at least substantially, in particular exactly along an edge of the masking (19), and
- the masking (19) is subsequently removed.

14. Use of a conveyor belt (1) according to one of claims 1 to 12 in a conveyor device, in particular a conveyor device for transferring freight at an airport, particularly preferably a conveyor device of an airport ground vehicle.

15. Use according to claim 14, **characterized in that** the conveyor belt (1) is used in a conveyor device with a roller track, preferably in such a way that the conveyor belt (1) embraces the roller track in an endless configuration.

16. Conveyor device, in particular for transferring freight at an airport, particularly preferably of an airport ground vehicle, comprising a conveyor belt (1) according to one of claims 1 to 12.

17. Conveyor device according to claim 16, **characterized in that** the conveyor device has a roller track and the conveyor belt (1) embraces the roller track in an endless configuration, and/or **in that** the seam flap (18) of the conveyor belt (1) is connected by means of an adhesive, in particular a 2-component adhesive, to a section of the carrier (2) lying under the seam flap (18) and/or to the other end region (15) of the belt layer (5).

## Revendications

1. Bande transporteuse (1) destinée à être utilisée dans un dispositif de transport en tant que bande sans fin, comprenant une couche de bande (5) flexible, de préférence imperméable, avec une face avant (6) destinée à recevoir le produit à transporter et une face arrière (7) opposée à la face avant (6), et un support (2) qui est relié à la couche de bande (5), en particulier qui est au moins partiellement encastré dans la couche de bande (5), la couche de bande (5) étant réalisée avec des extrémités ouvertes avec deux zones d'extrémité (14, 15) à placer l'un contre l'autre ou juxtaposées, qui se terminent par des bords (16, 17) orientées transversalement à la direction de déplacement (12) de la bande (1), l'une des zones d'extrémité (14) de la couche de bande (5) formant un rabat de couture (18) de la bande transporteuse (1), qui est donné par une section de la couche de bande (5), dans laquelle le support (2) n'est pas encastré dans la couche de bande (5), **caractérisé en ce que** la couche de bande (5) comprend ou est constituée de polyurée ou de polyuréthane, **et en ce que** la couche de bande (5) a été fabriquée en bombant un matériau de revêtement ou des matières premierès réagissant entre elles pour former un matériau de revêtement à l'état liquide sur au moins une face (3) du support (2).

2. Bande transporteuse (1) selon la revendication 1, **caractérisée en ce que** l'autre zone d'extrémité (15) de la couche de bande (5) ne forme pas de rabat de couture (18), mais qu'une section du support (2) y est noyée dans la couche de bande (5), de préférence jusqu'au bord (17) dans lequel l'autre zone d'extrémité (15) se termine.

3. Bande transporteuse (1) selon la revendication 1 ou 2, **caractérisée en ce que** l'épaisseur de la couche de bande (5) dans la zone du rabat de couture (18) est inférieure à l'épaisseur de la couche de bande (5) dans la zone restante de la bande transporteuse (1), et/ou **en ce que** le rabat de couture (18) se **caractérise par** une épaisseur au moins sensiblement constante, et/ou **en ce que** le rabat de couture (18) s'étend sur toute l'étendue de la bande transporteuse (1) dans une direction transversale à la direction de déplacement (12) de la bande (1), et/ou **en ce que** le rabat de couture (18) se **caractérise par** une étendue dans la direction de déplacement (12) de la bande (1) de l'ordre de 1 à 5 cm, en particulier de 2 à 3 cm.

4. Bande transporteuse (1) selon l'une des revendications précédentes, **caractérisée en ce que** la configuration est telle que, dans une configuration sans fin de la bande transporteuse (1), lorsque les deux zones d'extrémité (14, 15), en particulier leurs bords (16, 17), sont en appui l'une contre l'autre, la face avant du rabat de couture (18) forme ou peut former une portion de la face avant de la bande transporteuse (1) et la face arrière du rabat de couture (18) est opposée à une section du support (2), et/ou **en ce que** la configuration est telle que les deux zones d'extrémité (14, 15) de la couche de bande (5) sont ou peuvent être en appui l'une contre l'autre avec leurs bords libres (16, 17) par complémentarité de forme, respectivement sont en contact avec le support (2) dans une configuration sans fin, et/ou **en ce que** les deux zones d'extrémité (14, 15) de la couche de bande (5) se terminent vers le bord libre en biseaux (16, 17) complémentaires l'un de l'autre, et/ou **en ce que** la configuration est telle que, dans une configuration sans fin, lorsque les deux zones d'extrémité (14, 15) de la couche de bande (5) sont en appui l'-une contre l'autre, on obtient une bande transporteuse (1) d'épaisseur au moins sensiblement constante et/ou avec une face avant plane destinée à recevoir des marchandises à transporter.

5. Bande transporteuse (1) selon l'une des revendications précédentes, **caractérisée en ce que** la couche de bande (5) comprend ou est constituée de polyurée ou de polyuréthane d'un système à deux composants.

6. Bande transporteuse (1) selon l'une des revendications précédentes, **caractérisée en ce que** le support (2) est disposé sur la face arrière de la couche de bande (5), et est en particulier encastré dans la couche de bande (5) de telle sorte qu'il ne s'étend pas jusqu'à la face avant (6) de la couche de bande (5), et de préférence la face avant (6) de la couche de bande (5) forme la face avant de la bande transporteuse (1) et/ou la face arrière (4) du support (2) forme la face arrière de la bande transporteuse (1).

7. Bande transporteuse (1) selon l'une des revendications précédentes, **caractérisée en ce que** le support (2) est entièrement encastré dans la couche de bande (5).

8. Bande transporteuse (1) selon l'une des revendications précédentes, **caractérisée en ce que** le support est réalisé sous la forme d'une bande à maillons en spirale (2), qui comprend en particulier une pluralité d'hélices (8) dont les spires (9) s'engrènent à la manière d'une fermeture à glissière, et qui sont reliées à des fils d'enfilage (10), qui sont insérés dans des canaux (11) qui sont définis par des spires (9) s'engageant les unes dans les autres d'-hélices (8) voisines, les fils d'enfichage (10) s'étendant transversalement, de préférence au moins essentiellement orthogonalement, à la direction de déplacement (12) de la bande transporteuse (1).

9. Bande transporteuse (1) selon la revendication 8, **caractérisée en ce que** la bande à maillons en spirale (2) comporte des fils de remplissage (13) en plus des fils d'enfilage (10).

10. Bande transporteuse (1) selon la revendication 8 ou 9, **caractérisée en ce que** les hélices (8) et/ou les fils d'enfilage (10) et/ou les fils de remplissage (13) de la bande à maillons en spirale (2) comprennent des monofilaments de polymère ou sont constitués de monofilaments de polymère.

11. Bande transporteuse (1) selon l'une des revendications 8 à 10, **caractérisée en ce que** les hélices (8) et/ou les fils d'enfilage (10) et/ou les fils de remplissage (13) de la bande à maillons en spirale (2) comprennent du polyester ou sont en polyester.

12. Bande transporteuse (1) selon l'une des revendications précédentes, **caractérisée en ce que** la largeur de la bande transporteuse (1) se situe dans la plage de 1,5 à 3,0 m, en particulier de 2,2 à 2,4 m, et/ou la longueur de la bande transporteuse (1) se situe dans la plage de 8,0 à 20,0 m, en particulier dans la plage de 12 à 16 m.

13. Procédé de fabrication d'une bande transporteuse (1) selon l'une des revendications précédentes, dans lequel
- un support (2), qui est en particulier une bande à maillons en spirale, est fourni dans une configuration sans fin,
- une section du support (2), au-dessus de laquelle doit s'étendre ultérieurement le rabat de couture (18), est pourvue d'un masquage (19),
- sur la face du support (2) pourvue du masquage (19), on réalise la couche de bande (5) comprenant de la polyurée ou du polyuréthane ou en étant constituée, en pulvérisant à l'état liquide sur la face masquée du support (2) le matériau de revêtement ou les matères premières à partir desquelles le matériau de revêtement doit être formé,
- après le durcissement du matériau de revêtement, on réalise une coupe à travers la couche de bande (5) s'étendant transversalement, en particulier au moins sensiblement orthogonalement à la direction de déplacement de la bande, pour obtenir le rabat de couture (18), la coupe étant de préférence effectuée au moins sensiblement, en particulier exactement le long d'un bord du masquage (19), et
- le masquage (19) est ensuite retiré.

14. Utilisation d'une bande transporteuse (1) selon l'une des revendications 1 à 12 dans un dispositif de transport, en particulier un dispositif de transport servant au transfert de fret dans un aéroport, de préférence un dispositif de transport d'un véhicule terrestre d'aéroport.

15. Utilisation selon la revendication 14, **caractérisée en ce que** la bande transporteuse (1) est utilisée dans un dispositif de transport avec un convoyeur à rouleaux, de préférence de telle sorte qu'elle entoure le convoyeur à rouleaux en configuration sans fin.

16. Dispositif de transport, en particulier dispositif de transport servant au transfert de fret dans un aéroport, de préférence d'un véhicule terrestre d'-aéroport, comprenant une bande transporteuse (1) selon l'une des revendications 1 à 12.

17. Dispositif de transport selon la revendication 16, **caractérisé en ce que** le dispositif de transport présente un convoyeur à rouleaux et la bande transporteuse (1) entoure le convoyeur à rouleaux en configuration sans fin, et/ou **en ce que** le rabat de couture (18) de la bande transporteuse (1) est relié au moyen d'une colle, en particulier d'une colle à deux composants, à une section du support (2) située sous le rabat de couture (18) et/ou à l'autre zone d'extrémité (15) de la couche de bande (5).
